(19) Europäisches Patentamt
European Patent Office
Office européen des brevets

(11) **EP 3 026 998 B1**

(12) **EUROPÄISCHE PATENTSCHRIFT**

(45) Veröffentlichungstag und Bekanntmachung des Hinweises auf die Patenterteilung:
**10.04.2019   Patentblatt 2019/15**

(21) Anmeldenummer: **14748177.4**

(22) Anmeldetag: **01.08.2014**

(51) Int Cl.:
**A01C 7/04** (2006.01)       **A01C 7/20** (2006.01)
**A01C 7/08** (2006.01)

(86) Internationale Anmeldenummer:
**PCT/EP2014/066608**

(87) Internationale Veröffentlichungsnummer:
**WO 2015/014991 (05.02.2015 Gazette 2015/05)**

(54) **VERFAHREN ZUR DOSIERUNG VON KOERNIGEM GUT UND DOSIERVORRICHTUNG FUER KOERNIGES GUT**

METHOD FOR DOSING GRANULAR MATERIAL AND DOSING DEVICE FOR GRANULAR MATERIAL

PROCÉDÉ ET DISPOSITIF DE DOSAGE DE MATÉRIEL GRANULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013   DE 102013215182**

(43) Veröffentlichungstag der Anmeldung:
**08.06.2016   Patentblatt 2016/23**

(73) Patentinhaber: **Horsch Maschinen GmbH
92421 Schwandorf (DE)**

(72) Erfinder: **FUNCK, Gerald
69168 Schatthausen (DE)**

(74) Vertreter: **Benninger, Johannes
Benninger Patentanwaltskanzlei
Dr.-Leo-Ritter-Strasse 5
93049 Regensburg (DE)**

(56) Entgegenhaltungen:
EP-A2- 1 234 489          WO-A1-2004/004441
WO-A1-2013/186161      WO-A1-2013/186175
DE-B- 1 044 487

**Beschreibung**

Die vorliegende Erfindung betrifft ein Verfahren zur Dosierung von körnigem Gut wie Samenkörner, Dünger o. dgl. sowie eine Dosiervorrichtung für solches körnige Gut mit den Merkmalen der unabhängigen Ansprüche. Das körnige Gut wird durch eine Luftströmung getragen und befördert und durch eine Zuführleitung in ein Dosieraggregat geleitet, wonach es durch eine sich tangential an das Dosieraggregat anschließende und zumindest abschnittsweise leicht gekrümmt verlaufende Ausgangsleitung geleitet wird.

Aus dem Stand der Technik sind verschiedene Ansätze bekannt, die Drillsaat dahingehend zu verbessern, dass die Aussaat gleichmäßiger erfolgt. Das wichtigste Ziel, das hierbei verfolgt wird, besteht darin, die Kornabstände innerhalb der Reihe nicht zu stark variieren zu lassen, um sich damit einer Einzelkornsaat zumindest grob anzunähern.

Die DE 1 044 487 B offenbart eine Einzelkornsämaschine für körniges Gut. Das körnige Gut wird mittels eines Schiebers in das Sägehäuse geleitet. Im Sägehäuse ist ein rotierendes Löffelrad vorgesehen. Jeder einzelne Löffel weist an einem Ende einen Löffelbecher auf, so dass jeweils ein einzelnes Korn aufgenommen werden kann. Über eine Kippbewegung der einzelnen Löffel im laufenden Betrieb des Löffelrades wird das Saatkorn in das Umlenkrohr geschleudert, von wo es durch das Saatleitungsrohr in die vom Furchenzieher gezogene Furche fällt.

Die WO 2004/004441 A1 offenbart ein Verteilaggregat für körniges Gut. Die Beförderung des körnigen Guts in den Innenraum des Verteilaggregats und aus diesem heraus erfolgt bei diesem Verteilaggregat durch eine Luftströmung.

Die WO 2012/167372 A1 beschreibt eine Verzögerungsvorrichtung für körniges Gut, das von einem Luftstrom getragen wird. Die Vorrichtung umfasst eine Säschar mit einer Saatleitung, die mit einer Luftleitung für die im Boden abzulegenden Saatkörner ausgestattet ist. Um die Förder- und Fallgeschwindigkeit der Saatkörner kurz vor der Ablage im Boden zu reduzieren, ist die Förderleitung in einem wendelförmigen Verlauf geführt, so dass sich die Körner beruhigen und in reduzierter bzw. vergleichmäßigter Geschwindigkeit im Boden abgelegt werden können.

Die nach dem Zeitrang der vorliegenden Anmeldung veröffentlichte DE 10 2012 105 048 A1 beschreibt ein Verteilaggregat für körniges Gut, das insbesondere als Säaggregat eingesetzt werden kann. In einem Gehäuse rotiert dort eine profilierte Förderscheibe, die in Zusammenwirkung mit der Gehäusegestaltung und dessen konturierter Innenmantelfläche für eine Vereinzelung der mittels Luftstrom in das Gehäuse getragenen Körner sorgt, so dass die Saatkörner nach ihrer Vereinzelung in annähernd gleichmäßigen Kornabständen aus dem Gehäuse abgegeben werden. Überschüssige Körner bzw. solche, die die gleichmäßigen Kornabstände stören würden, verbleiben im Gehäuse und werden dort nochmals oder ggf. mehrfach umgewälzt.

Da sich die Einzelkornsaat bei Getreide aus verschiedenen Gründen, im Wesentlich jedoch aus wirtschaftlichen Gründen bisher nicht durchsetzen konnte, versucht das vorliegende, erfindungsgemäße Verfahren, die Korneinzelung bei der pneumatisch unterstützten Aussaat bei herkömmlichen Drillmaschinen soweit zu verbessern, dass von einer weitgehend äquidistanten Saat gesprochen werden kann, die einer Einzelkornsaat zumindest sehr nahe kommt.

Somit besteht ein erstes Ziel der vorliegenden Erfindung darin, ein solches verbessertes Korneinzelungsverfahren zur Verfügung zu stellen, das sich nicht nur für große Samenkörner wie Mais, sondern bspw. auch für Kornarten wie Getreide, Sonnenblumen oder Raps eignet. Dieses erste Ziel der Erfindung wird mit dem Gegenstand des unabhängigen Verfahrensanspruchs erreicht; Merkmale vorteilhafter Weiterbildungen der Erfindung ergeben sich aus den abhängigen Ansprüchen.

So sieht die vorliegende Erfindung ein Verfahren zur Dosierung von körnigem Gut wie Samenkörner, Dünger o. dgl. vor. Das Verfahren kann insbesondere innerhalb eines Verteil- oder Säaggregats einer Verteil oder Sämaschine eingesetzt werden. Das durch eine Luftströmung getragene und beförderte körnige Gut wird durch eine Zuführleitung in ein Dosieraggregat geleitet, dort in einem ungefähr kreisbogenförmigen Verlauf geführt und tangential in eine sich an das Dosieraggregat anschließende und zumindest abschnittsweise leicht gekrümmt verlaufende Ausgangsleitung geleitet. Das Verfahren sieht vor, dass das in einem äußeren Bereich der gekrümmten Ausgangsleitung annähernd äquidistant und/oder gleichmäßig dosierte und beförderte körnige Gut von der das Dosieraggregat zumindest teilweise durch die Ausgangsleitung verlassenden abgeleiteten Luftströmung getragen wird. Wahlweise kann das körnige Gut auch durch einen Teil des Luftstroms getragen werden, wenn bspw. ein anderer Teil des Luftstroms durch ein Bypassventil ausgeleitet und abgeblasen wird.

Gemäß einer Ausführungsvariante wird weitgehend der gesamte Luftstrom im Dosieraggregat geführt und durch dieses hindurch geleitet. Wahlweise wird nur ein Teil des Luftstroms durch das Dosieraggregat bzw. in die Ausgangsleitung geführt und trägt dort vorzugsweise das körnige Gut. In einer nicht erfindungsgemäßen Ausführungsvariante verfügt das körnige Gut über ausreichende kinetische Energie, so dass es weitgehend durch seine eigene Bewegungsenergie in der gewünschten Weise befördert und durch die Ausgangsleitung ausgetragen wird.

Weiterhin ist wahlweise vorgesehen, dass sich die Kreisbögen der Ausgangsleitung und der Innenmantelfläche des Dosieraggregats tangential berühren und die Luft- und Kornführungsverläufe stufen- bzw. nahtlos ineinander übergehen. Wahlweise ist es möglich, dass sich ein Krümmungsradius der Ausgangsleitung mit steigendem Abstand vom Dosieraggregat stetig oder unstetig öffnet. Alternativ hierzu kann der Krümmungsradius der Ausgangsleitung zumindest in einem an das Dosieraggregat grenzenden Abschnitt annähernd konstant sein. Mit Hilfe des erfindungsgemäßen Verfahrens kann das auszubringende körnige Gut weitgehend kollisionsfrei und/oder verwirbelungsfrei in der Ausgangsleitung geführt werden, da es in seiner Bewegungsbahn in etwa dem Verlauf der Ausgangsleitung folgt.

Vorteilhaft für einen weitgehend kollisionsfreien Bewegungsverlauf der Körner innerhalb der Ausgangsleitung ist ein zunehmender Geschwindigkeitsgradient der in der Ausgangsleitung geführten Luftströmung vom Innen- zum Außenradius. D.h., die dem Außenradius nähere Luft, welche die Körner trägt, strömt schneller als die am Innenradius geführte Luft. Es hat sich durch Versuche belegen lassen, dass die Korngeschwindigkeit in Nähe des Außenradius der gekrümmten Ausgangsleitung tendenziell höher liegt als in Nähe des Innenradius, wenn auch die Geschwindigkeitsunterschiede je nach Versuchsbedingungen teilweise nur sehr gering ausfallen. Dennoch lassen sich Geschwindigkeitsunterschiede in einstelligen niederen Prozentbereichen feststellen, in Bereichen von ca. 0,3 bis zu ca. 3%.

Wenn im vorliegenden Zusammenhang von einer weitgehend kollisionsfreien Kornförderung die Rede ist, so sind damit Kollisionen der Körner untereinander gemeint, die mit Hilfe des erfindungsgemäßen Verfahrens sowie durch den Betrieb der erfindungsgemäßen Dosiervorrichtung weitestgehend verhindert werden können. Eine annähernd verwirbelungsfreie Kornförderung meint dementsprechend einen dem Leitungsverlauf der Zuführ- und Ausgangsleitung sowie der kreisförmigen Bewegungsbahn entlang des Gehäuses der Dosiervorrichtung ungefähr folgenden Korntransport.

Das erfindungsgemäße Verfahren sieht vor, dass das körnige Gut innerhalb des Dosieraggregats mit mechanischer Unterstützung und/oder unter zumindest teilweiser Separierung von der tragenden Luftströmung an einer Innenmantelfläche oder Innenwandung geführt wird, wobei den sich der Ausgangsleitung nähernden einzelnen Körnern in etwa gleiche Abstände voneinander aufgeprägt werden. Diese Variante des Verfahrens hat den Vorteil, dass die das körnige Gut tragende Luftströmung ununterbrochen von der Zuführleitung, durch das Dosieraggregat und bis zur Ausgangsleitung geführt wird. Zudem wird dadurch die durch die Ausgangsleitung geführte und das annähernd äquidistant beförderte körnige Gut tragende und fördernde Luftströmung innerhalb des Dosieraggregats beschleunigt, so dass die im Dosieraggregat beschleunigte Luftströmung mit einer Geschwindigkeit in die Ausgangsleitung eintritt und aus dieser hinaustritt, die größer ist als eine Zuführgeschwindigkeit, mit der die Luftströmung in die Zuführleitung eintritt. Allerdings ist zu erwähnen, dass diese Beschleunigung der kornfördernden Luft in erster Linie durch die verschiedenen Leitungsquerschnitte bewirkt wird, da die Ausgangsleitung normalerweise einen kleineren Querschnitt aufweist als die zuführende Leitung bzw. die Saatleitung, die bspw. von einem zentralen Verteilerkopf zu den Säscharen mündet. Das Korn wird in der Dosiervorrichtung beschleunigt und ist hierbei bereits von der Luftströmung umgeben, welche die Körner bis in das Fallrohr und zur Säschar begleitet und trägt.

Bei dem erfindungsgemäßen Verfahren kann vorgesehen sein, dass das durch eine Luftströmung getragene und beförderte körnige Gut durch eine zumindest abschnittsweise geradlinig verlaufende Zuführleitung tangential in ein Dosieraggregat geleitet, dort in einem ungefähr kreisbogenförmigen Verlauf mit einem Bogenwinkel von bspw. wenigstens 180 Grad, vorzugsweise jedoch von ca. 270 Grad oder mehr unter zumindest teilweiser Separierung des körnigen Guts von der tragenden und fördernden Luftströmung geführt und tangential in eine sich an das Dosieraggregat anschließende und zumindest abschnittsweise geradlinig oder leicht gekrümmt verlaufende Ausgangsleitung geleitet wird, wobei das dort annähernd gleichmäßig dosierte und/oder äquidistant beförderte körnige Gut von der das Dosieraggregat weitgehend vollständig durch die Ausgangsleitung verlassenden abgeleiteten Luftströmung getragen wird. Das körnige Gut oder Saatgut sowie die das Gut tragende Luftströmung kann in dem vorzugsweise scheibenförmig aufgebauten Dosieraggregat bspw. eine komplette Umdrehung ausführen, bevor es in die gekrümmt verlaufende Ausgangsleitung mündet. So kann bei dem Verfahren vorgesehen sein, dass die tangential in das Dosieraggregat geleitete Luftströmung dort in einem ungefähr kreisbogenförmigen Verlauf mit einem Bogenwinkel von ca. 330 bis 390 Grad geführt und tangential in die Ausgangsleitung geleitet wird. Da der Luftstrom an keiner Stelle unterbrochen wird, sondern ununterbrochen und in weitgehend gleichmäßig gekrümmtem Verlauf (mit tangentialen Übergängen) durch das Dosieraggregat geleitet wird, kann die auf diese Weise stark beruhigte und vergleichmäßigte Luftströmung dazu genutzt werden, im Zusammenhang mit lenkenden, leitenden und/oder separierenden Wirkungselementen innerhalb des Dosieraggregats, die Kornabstände weitgehend zu vergleichmäßigen, so dass die Körner, welche durch die Ausgangsleitung geführt werden, sowohl weitgehend gleiche Korngeschwindigkeiten als auch weitgehend gleiche Abstände voneinander aufweisen.

Bei dem erfindungsgemäßen Verfahren wird das körnige Gut innerhalb des Dosieraggregats mit mechanischer Unterstützung und/oder unter zumindest teilweiser Separierung von der tragenden Luftströmung an einer Innenmantelfläche oder Innenwandung geführt, wobei den sich der Ausgangsleitung nähernden einzelnen Körnern in etwa gleiche Abstände voneinander aufgeprägt werden. In diesem Zusammenhang kann vorgesehen sein, dass die Luftströmung in einem inneren Bereich des Dosieraggregats und zumindest teilweise von den kornführenden Bereichen der Innenmantelfläche oder Innenwandung beabstandet geführt wird. Dabei wird die das körnige Gut tragende und fördernde Luftströmung ununterbrochen von der Zuführleitung, durch das Dosieraggregat und bis zur Ausgangsleitung geführt.

Erfindungsgemäß ist vorgesehen, dass die durch die Ausgangsleitung geführte und das annähernd äquidistant beförderte körnige Gut tragende und fördernde Luftströmung innerhalb des Dosieraggregats beschleunigt wird, was bspw. durch eine rotierende Förder- und/oder Fächerscheibe erfolgen kann. Auf diese Weise kann erreicht werden, dass die im Dosieraggregat beschleunigte Luftströmung mit einer Geschwindigkeit in die Ausgangsleitung eintritt und aus dieser an einer Mündung hinaustritt, die größer ist als eine Zuführgeschwindigkeit, mit der die Luftströmung in die Zuführleitung eintritt. Die rotierende Förder- und/oder Fächerscheibe kann auch im Wesentlichen dazu dienen, die gewünschte Längsverteilung der Körner herzustellen.

In diesem Zusammenhang kann es zudem von Vorteil sein, wenn die Ausgangsleitung einen sich verjüngenden Querschnitt aufweist, so dass die Geschwindigkeit der in der Ausgangsleitung geführten Luftströmung und damit der von der Luftströmung getragenen Körner mit zunehmender Entfernung vom Dosieraggregat und mit abnehmendem Leitungsquerschnitt der Ausgangsleitung zunimmt. Wenn somit durch gezielte Querschnittsverjüngung der Ausgangsleitung die Körner in Richtung zur Leitungsmündung bzw. zum Abgabeort im Boden gleichmäßig beschleunigt werden, kann dies entweder für sich und/oder in Kombination mit der gleichmäßigen Kornführung am Außenradius der gekrümmten Ausgangsleitung für eine gezielte Verbesserung der gleichmäßigen Kornabstände und damit für eine weitere Präzisierung der Längsverteilung der Körner bei ihrer Ablage sorgen.

Die vorliegende Erfindung umfasst weiterhin eine Dosiervorrichtung für körniges Gut wie Samenkörner, Dünger o. dgl., die insbesondere Bestandteil eines Verteil- oder Säaggregats einer Verteil oder Sämaschine sein kann. Die erfindungsgemäße Dosiervorrichtung umfasst ein Dosieraggregat, in das eine Zuführleitung zur Aufnahme einer Luftströmung und zu deren Förderung in das Dosieraggregat mündet. Die Luftströmung trägt und befördert das körnige Gut. Zudem ist die Luftströmung innerhalb des Dosieraggregats in einem ungefähr kreisbogenförmigen Verlauf geführt und wird tangential in eine sich an das Dosieraggregat anschließende und zumindest abschnittsweise leicht gekrümmt verlaufende Ausgangsleitung geleitet. Weiterhin ist vorgesehen, dass sich die Kreisbögen der Ausgangsleitung und der Innenmantelfläche des Dosieraggregats tangential berühren und die Luft- und Kornführungsverläufe stufen- bzw. nahtlos ineinander übergehen. Außerdem ist ein Krümmungsradius der Ausgangsleitung zumindest in einem an das Dosieraggregat grenzenden Abschnitt annähernd konstant. Wahlweise kann vorgesehen sein, dass sich der Krümmungsradius der Ausgangsleitung mit steigendem Abstand vom Dosieraggregat stetig oder unstetig öffnet.

Bei der erfindungsgemäßen Dosiervorrichtung ist vorgesehen, dass das körnige Gut innerhalb des Dosieraggregats mit mechanischer Unterstützung und/oder unter zumindest teilweiser Separierung von der tragenden Luftströmung an einer Innenmantelfläche oder Innenwandung geführt ist, wobei den sich der Ausgangsleitung nähernden einzelnen Körnern in etwa gleiche Abstände voneinander aufprägbar sind. Hierbei ist eine das körnige Gut tragende Luftströmung ununterbrochen von der Zuführleitung, durch das Dosieraggregat und bis zur Ausgangsleitung geführt. Zudem ermöglicht die mechanische Unterstützung innerhalb des Dosieraggregats eine erfindungsgemäße Beschleunigung der Luft, so dass die durch die Ausgangsleitung geführte und das annähernd äquidistant beförderte körnige Gut tragende und fördernde Luftströmung innerhalb des Dosieraggregats beschleunigt ist.

Wie erwähnt, kann die erfindungsgemäße Dosiervorrichtung eine zumindest abschnittsweise geradlinig verlaufende Zuführleitung zur Lenkung einer, das körnige Gut tragenden und fördernden Zuluftströmung umfassen, wobei diese Zuführleitung insbesondere tangential in das Dosieraggregat münden kann. Das Dosieraggregat weist eine Luft- und Kornführung mit einem ungefähr kreisbogenförmigen Verlauf mit einem Bogenwinkel von wenigstens ca. 180 Grad, vorzugsweise ca. 270 Grad oder mehr auf. Weiterhin kann vorgesehen sein, dass aus dem Dosieraggregat in tangentialer Richtung eine zumindest abschnittsweise geradlinig oder leicht gekrümmt verlaufende Ausgangsleitung geführt ist. Im Dosieraggregat erfolgt eine zumindest teilweise Separierung des körnigen Guts von der tragenden und fördernden Luftströmung, die tangential in das Dosieraggregat geleitet und tangential aus diesem heraus geleitet ist. Außerdem ist vorgesehen, dass sich eine gleichmäßige oder sich mit zunehmendem Abstand vom Dosieraggregat sichelförmig öffnende Krümmung der Ausgangsleitung tangential an eine kornführende Innenwandung des Dosieraggregats anschließt, so dass weder die Luftströmung noch die damit beförderten Körner eine abrupte Kornumlenkung erfahren. Vielmehr ist die das körnige Gut tragende Luftströmung ununterbrochen von der Zuführleitung, durch das Dosieraggregat und bis zur Ausgangsleitung geführt, wobei gleichzeitig eine gleichmäßig gekrümmte Umlenkung im Bereich des Dosieraggregats als auch eine gleichmäßige Kornbeabstandung zumindest im Bereich der Ausgangsleitung gewährleistet ist.

Bei der Dosiervorrichtung ist erfindungsgemäß die durch die Ausgangsleitung geführte und das annähernd äquidistant beförderte körnige Gut tragende und fördernde Luftströmung innerhalb des Dosieraggregats beschleunigt, wobei insbesondere eine die Luftströmung im Dosieraggregat beschleunigende rotierende Förder- oder Fächerscheibe vorgesehen sein kann. Vorzugsweise rotiert diese optional zu verstehende rotierende Förder- oder Fächerscheibe in etwa konzentrisch innerhalb des Dosieraggregats. Außerdem kann für die ungefähr konzentrisch innerhalb des Dosieraggregats rotierende Förder- oder Fächerscheibe ein elektromotorischer Antrieb vorgesehen sein.

Wie oben bereits erwähnt, kann die rotierende Förder- und/oder Fächerscheibe auch im Wesentlichen dazu eingesetzt werden, den Körnern die gewünschte Längsverteilung aufzuprägen. Eine Beschleunigung der Luft erfolgt dann, wenn dies durch das jeweilige Verhältnis zwischen der Menge an in das Dosieraggregat einströmender Luft zur Drehzahl der Förder- und/oder Fächerscheibe vorgegeben wird.

Eine weitere Variante der erfindungsgemäßen Dosiervorrichtung kann vorsehen, dass ein Leitungsquerschnitt der Ausgangsleitung mit zunehmender Entfernung vom Dosieraggregat zumindest abschnittsweise stetig oder unstetig reduziert ist. Auf diese Weise kann erreicht werden, dass die Geschwindigkeit der in der Ausgangsleitung geführten Luftströmung und damit der von der Luftströmung getragenen Körner mit zunehmender Entfernung vom Dosieraggregat und mit abnehmendem Leitungsquerschnitt der Ausgangsleitung zunimmt. Die Verjüngung der Ausgangsleitung, die wahlweise stetig, abschnittsweise stetig oder wahlweise auch unstetig ausgeführt sein kann, sorgt für eine zusätzliche Beschleunigung des Luftstroms und damit der darin getragenen Körner in Richtung zur Leitungsmündung bzw. zum Abgabeort im Boden, wobei diese Beschleunigung vorzugsweise gleichmäßig erfolgt, was am besten durch eine stetige Verjüngung des Leitungsquerschnittes zu erreichen ist. Diese Verjüngung sorgt darüber hinaus für eine Beruhigung abprallender und nicht kollisionsfrei in der Leitung geführter Körner. Die Verjüngung kann in Kombination mit der gleichmäßigen Kornführung am Außenradius der gekrümmten Ausgangsleitung für eine gezielte Verbesserung der gleichmäßigen Kornabstände und damit für eine weitere Präzisierung der Längsverteilung der Körner bei ihrer Ablage sorgen.

Die beschriebene Dosiervorrichtung eignet sich insbesondere zur Platzierung in kornführenden Leitungen, insbesondere in Saatleitungen einer an sich bekannten Sämaschine, insbesondere einer solchen, die pneumatisch fördert. In jeder Saatleitung kann eine solche Dosiervorrichtung angeordnet sein, wo sie für eine Sicherstellung einer annähernd vereinzelten Saatgutverteilung sorgen kann. Damit handelt es sich bei der Dosiervorrichtung um ein Anbaugerät, das für die Ergänzung einer existierenden Sämaschine geeignet ist und diese zu einer Einzelkornsämaschine macht.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung einer pneumatisch arbeitenden Sämaschine mit volumendosiertem Saatgut, das über einen Zentralverteiler zu einzelnen Saatleitungen mit mündungsseitig daran angeordneten Säscharen geführt wird.

Fig. 2 zeigt in einer schematischen Darstellung den grundsätzlichen Aufbau einer erfindungsgemäßen Dosiervorrichtung, die innerhalb einer Saatleitung einer Sämaschine gemäß Fig. 1 angeordnet ist.

Fig. 3 zeigt in einer schematischen Darstellung die Kontur einer als Saatleitung ausgebildeten Ausgangsleitung, die tangential an die Dosiervorrichtung anschließt.

Fig. 4 zeigt den Strömungsverlauf innerhalb der Ausgangsleitung in schematischer Weise.

Fig. 5 zeigt einen schematischen Strömungsverlauf innerhalb einer Variante der Ausgangsleitung, die sich im Querschnitt verjüngt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

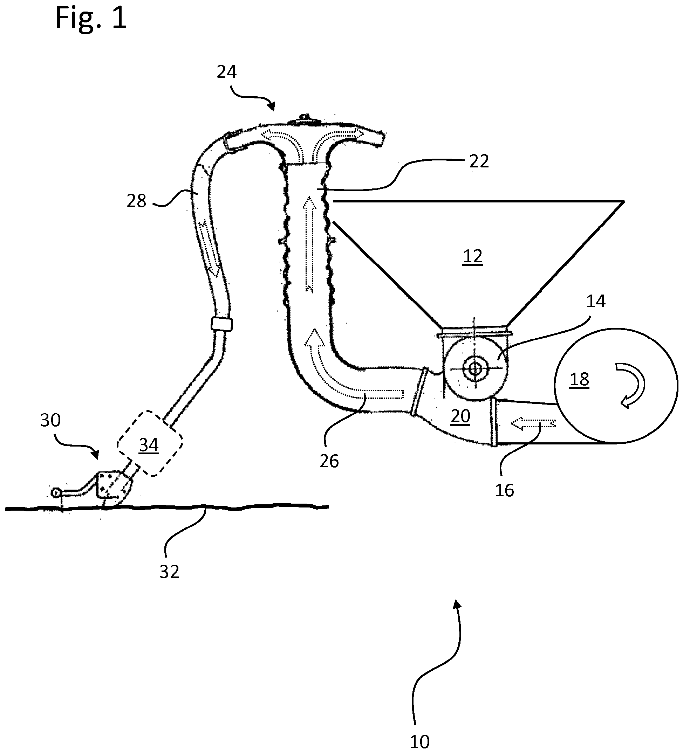

Die schematische Darstellung der Fig. 1 zeigt eine pneumatisch arbeitende Sämaschine 10 mit volumendosiertem Saatgut, das über einen Zentralverteiler zu einzelnen Saatleitungen mit mündungsseitig daran angeordneten Säscharen geführt wird. Die in ihrem grundlegenden Aufbau aus dem Stand der Technik bekannte Sämaschine 10 weist typischerweise einen trichterförmigen Vorratsbehälter 12 mit körnigem Gut, insbesondere mit Saatgut auf, an dessen Unterseite sich eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten Steigrohr 22 führt. An einer Oberseite des Steigrohrs 22 - dies kann bspw. ein sog. Wellrohr o. dgl. sein - befindet sich ein Zentralverteiler 24, der den körnertragenden Luftstrom 26 möglichst gleichmäßig zu einer Vielzahl von Saatleitungen 28 verteilt. Die einzelnen Saatleitungen 28, von denen der besseren Übersichtlichkeit halber nur eine dargestellt ist, münden schließlich jeweils an Säscharen 30, mit denen das Saatgut in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es die Fig. 1 erkennen lässt, befindet sich innerhalb der Saatleitung 28, typischerweise in unmittelbarer Nähe zur Säschar 30, eine erfindungsgemäße Dosiervorrichtung 34, die dafür sorgt, dass die Säschar 30 mit körnigem Gut bzw. mit Saatgut beaufschlagt wird, das in annähernd gleichen Kornabständen und mit weitgehend jeweils gleichen Fördergeschwindigkeiten in den Ackerboden 32 abgegeben wird. Da bei einer realen Sämaschine eine Vielzahl solcher paralleler Säschare 30 vorgesehen sind (z.B. vierundzwanzig, zweiunddreißig oder mehr), die jeweils mit separaten Saatleitungen 28 verbunden und von diesen versorgt sind, ist auch eine entsprechende Anzahl von erfindungsgemäßen, jeweils gleichartig aufgebauten Dosiervorrichtungen 34 vorgesehen, da jede einzelne Saatleitung 28 eine solche Dosiervorrichtung 34 aufweist.

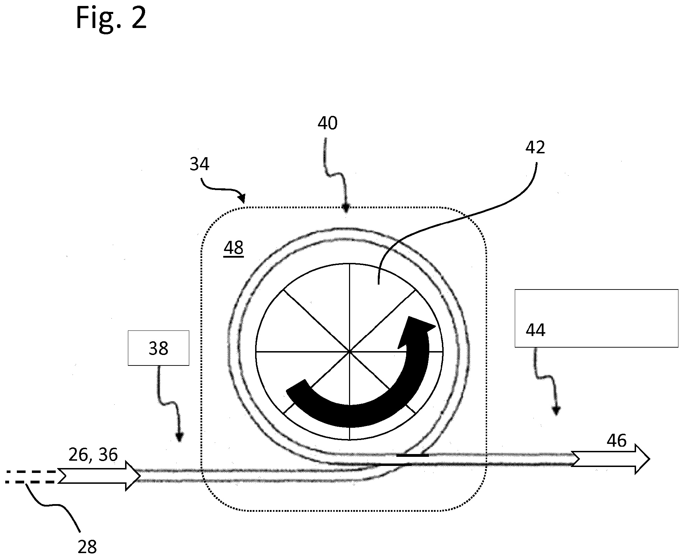

Die Fig. 2 zeigt in einer schematischen Darstellung den grundsätzlichen Aufbau einer erfindungsgemäßen Dosiervorrichtung 34, die innerhalb einer Saatleitung 28 einer Sämaschine 10 gemäß Fig. 1 angeordnet ist. So strömt der körnertragende Luftstrom 26 als Zuluft 36 mit einer ersten Geschwindigkeit $v_1$ durch eine innerhalb der Saatleitung 28 angeordneten Zuführleitung 38 tangential in die Dosiervorrichtung 34 ein, wobei die Zuluft 36 mittels einer im Dosieraggregat 40 der Dosiervorrichtung 34 rotierenden Förder- und/oder Fächerscheibe 42 beschleunigt wird. Gleichzeitig werden dadurch die in der Zuluft 36 getragenen und beförderten Körner (z.B. Saatkörner) in einer Weise sortiert und in eine Ordnung zueinander gebracht, dass sie beim tangentialen Austritt aus dem Dosieraggregat 40 in eine Ausgangsleitung 44 ungefähr gleiche Abstände voneinander aufweisen. Die im Dosieraggregat 40 beschleunigte Förderluft 46 bzw. körnertragende Luftströmung tritt aus der Ausgangsleitung 44 mit höherer Geschwindigkeit ($v_2$) aus als sie in die Zuführleitung 38 eintritt, so dass gilt:

$$v_2 > v_1.$$

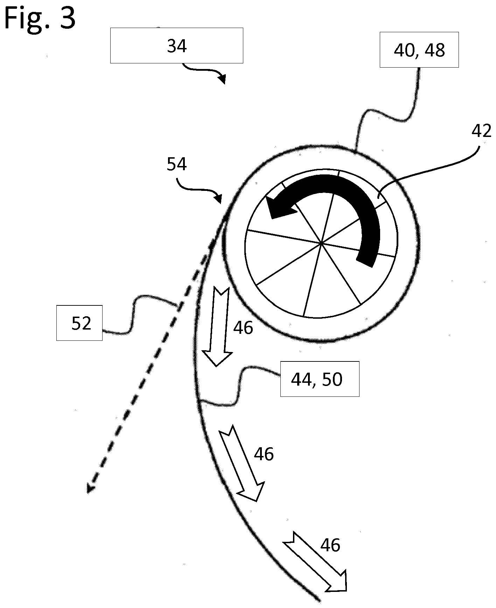

Sowohl die Zuführleitung 38 als auch die Ausgangsleitung 44 münden jeweils annähernd tangential am Dosieraggregat 40 der Dosiervorrichtung 34, in dem die Luft mitsamt den getragenen und beförderten Körnern eine Umlenkung von vorzugsweise mindestens 330 Grad, typischerweise von ca. 360 Grad erfährt. Die Ausgangsleitung 44 kann anschließend in eine Saatleitung (vgl. Fig. 3) münden, die zur Säschar 30 führt (vgl. Fig. 1), mit der die Körner im Ackerboden 32 abgelegt werden. Wahlweise kann die Ausgangsleitung 44 eine sichelförmige Krümmung aufweisen, welche die Krümmung des Luftführungsverlaufs innerhalb des Dosieraggregats 40 aufnimmt und mit größerem Krümmungsradius fortsetzt.

Wie es die schematische Darstellung der Fig. 2 erkennen lässt, ist der Luftstrom von der Versorgung (Gebläse 18) bis zur Abgabe am Säschar 30 (vgl. Fig. 1) ununterbrochen geführt, so dass der komplette Luftstrom das gesamte System durchläuft, bevor er an der Säschar 30 mitsamt den transportierten und weitgehend äquidistant abgegebenen Körnern austritt. Die Förder- und/oder Fächerscheibe 42 im Dosieraggregat 40 kann wahlweise motorisch angetrieben sein, insbesondere elektromotorisch. Innerhalb des Dosieraggregats 40 werden die Körner normalerweise vom Luftstrom - zumindest teilweise - getrennt, wobei auch die außen geführten Körner eine kreisbogenförmige Bewegung beschreiben, wenn sie an der Innenmantelfläche des Dosierers 40 entlang geführt werden. Der Luftstrom wird normalerweise auf kleinerem Radius, im Innenbereich des Dosierers 40 geführt und kann dort ggf. verwirbeln, bevor er die in die Ausgangsleitung 44 ausgetragenen Körner an deren tangentialer Mündung wieder mitreißt. Die durch die Ausgangsleitung 44 mit der austretenden Luft 46 beförderten Körner eignen sich hervorragend zur exakten Ablage im Boden 32, da ihre Geschwindigkeit und Position sehr genau steuerbar ist. Das gezeigte Verfahren sorgt innerhalb des Dosierers 34 bzw. 40 für die gewünschte Kornbeschleunigung und kann auf weitere Hilfsmittel wie eine zusätzliche Luftversorgung weitgehend verzichten.

Das Saatgut bewegt sich zunächst mit konstanter Geschwindigkeit ($v_1$), die durch die Luftgeschwindigkeit der fördernden Luft 26 vorgegeben ist. Diese Förderluft 26 stammt von der zentralen Luftversorgung der pneumatischen Sämaschine 10, bei der die Körner dem Luftstrom 16 zudosiert werden, der vom Gebläse 18 stammt (Venturi-Prinzip oder Drucktank-Prinzip). In der Dosiervorrichtung 34 wird die Luftgeschwindigkeit durch die Rotation der mechanisch wirkenden Förder-/Fächerscheibe 42 erhöht, wodurch sich die aus der Ausgangsleitung 44 tretende Luftgeschwindigkeit ($v_2$) erhöht und damit die Fördergeschwindigkeit für die Körner. Diese werden anschließend annähernd ungebremst an das Saatleitungsrohr abgegeben.

Die schematische Darstellung der Fig.3 veranschaulicht einige wichtige Aspekte des erfindungsgemäßen Verfahrens sowie der erfindungsgemäßen Dosiervorrichtung 34. So weist diese die in der Fig. 2 gezeigte Luftzuführung 38 zu ihrem Gehäuse 48 auf, in dem die Förder- bzw. Fächerscheibe 42 rotiert, bspw. angetrieben von einem Elektromotor. Die eintretende Zuluft 36 durchströmt das Dosieraggregat 40 und tritt tangential durch die Ausgangsleitung 44 aus. Die einströmende Luft 36 trägt das zu verteilende körnige Gut, insbesondere die Saatkörner, die innerhalb des Dosieraggregats 40 zumindest teilweise von der dort hindurchgeleiteten Luftströmung getrennt und vergleichmäßigt, d.h. in weitgehend gleichmäßige Abstände voneinander gebracht werden. Die als Fallrohr oder Saatleitungsrohr 50 ausgebildete Ausgangsleitung 44 weicht vom geradlinigen tangentialen Verlauf 52 (unterbrochene Linie) ab und weist eine gleichmäßige oder sich öffnende Krümmung auf, die der Krümmung des Gehäuses 48 der Dosiervorrichtung 34 folgt, jedoch einen größeren Radius aufweist, der am tangentialen Übergang 54 zum Fallrohr 50 beginnt.

Was die Fig. 3 nicht deutlich erkennen lässt, ist ein Krümmungsverlauf des Saatleitungsrohrs 50, der sich ggf. zu seiner unteren Mündungsöffnung, die sich in Nähe des Ackerbodens 32 befindet, etwas reduzieren kann. Da im Bereich der Säschar 30 sinnvollerweise eine (hier nicht dargestellte) Fangrolle o. dgl. angeordnet sein kann, die dazu dient, ein Verspringen der schnell in den Boden beförderten Körner zu verhindern, kann es je nach Anordnung der Dosiervorrichtung 34 im Bereich der Saatleitung 28 sinnvoll sein, die Krümmung des Saatleitungsrohrs 50 daran anzupassen, was eine engere Krümmung im Bereich der unteren Mündung des Saatleitungsrohrs 50 erforderlich machen kann.

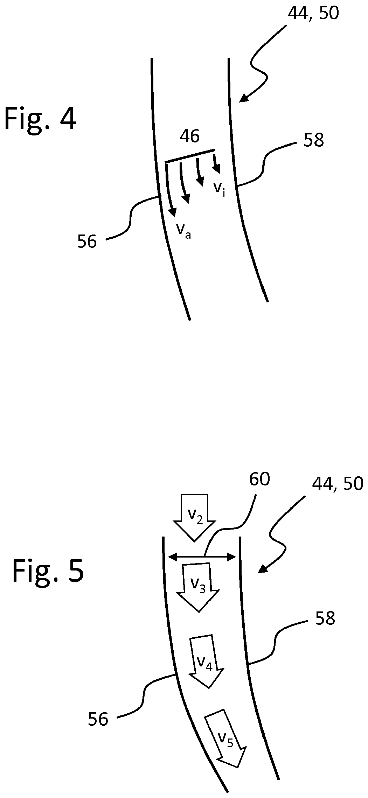

Wie es die Fig. 4 verdeutlicht, bewegen sich die Körner im Fallrohr 50 bzw. der Ausgangsleitung 44 im Wesentlichen entlang der Außenkontur 56. Das Dosieraggregat 40 ist so konzipiert, dass sich Körner entlang einer Wand bzw. Innenmantelfläche im Dosierer 34 bewegen. Das Fallrohr 50 folgt in seinem Verlauf der Kontur dieser Innenmantelfläche tangential, allerdings mit vergrößertem Krümmungsradius. Das Saat- oder Fallrohr 50 (Ausgangsleitung 44) ist annähernd sichelförmig gestaltet, wodurch das Saatgut die bereits eingenommene Kreisbahn weiter verfolgen kann. Hierdurch können Kollisionen der Körner im Saatrohr 50 und damit ein Verspringen und eine ungenaue Abgabe des Saatgutes am unteren Ende des Fallrohrs 50 und seiner Mündung zur Säschar 30 vermieden bzw. verhindert werden.

Die Fig. 4 lässt erkennen, dass die Luftgeschwindigkeit am Außenbereich 56 der gekrümmten Ausgangsleitung 44 größer als am Innenbereich 58 der Krümmung ($v_a > v_i$), so dass auch die von der Luftströmung 46 getragenen Körner sich im Bereich der schnelleren Luftströmung ($v_a$) befinden. Durch die weitgehend gleichmäßige und verwirbelungsarme Strömung kollidieren die Körner kaum mit den Wänden der Saatleitung 50 und behalten dadurch ihre Abstände voneinander bei. Dies ermöglicht die weitgehend äquidistante Kornabgabe mit exakt definierbaren Abständen und definierbarer Abgabegeschwindigkeit. Die Zuluft 36 in der Zuführleitung 38 kann bspw. eine Strömungsgeschwindigkeit von ca. 20 m/s aufweisen, wobei die in der Luft getragenen Körner typischerweise eine etwas geringere Fördergeschwindigkeit von ca. 10 bis 15 m/s aufweisen können. Die durch die schnell rotierende Förder- bzw. Fächerscheibe 42 innerhalb des Dosieraggregats 40 beschleunigte, durch die Ausgangsleitung 44 bzw. das Saatleitungsrohr 50 austretende Luftströmung 46 kann dann eine etwas höhere Strömungsgeschwindigkeit von bspw. 25 m/s aufweisen. D.h., die Luftströmung 46 und damit auch die mitgetragenen Körner werden gegenüber dem Eingang 38 deutlich beschleunigt. In diesem Zusammenhang ist allerdings zu erwähnen, dass die Beschleunigung der Luftströmung im Bereich der Dosiervorrichtung 34 in erster Linie den engeren Leitungsquerschnitten der Ausgangsleitung 44 gegenüber der Zuführleitung 38 geschuldet ist.

Die schematische Längsschnittansicht der Fig. 5 zeigt beispielhaft einen Strömungsverlauf innerhalb einer Variante der Ausgangsleitung 44, die sich in ihrem Verlauf in Strömungsrichtung im Querschnitt verjüngt. Dort ist erkennbar, dass der Leitungsquerschnitt 60 der Ausgangsleitung 44 mit zunehmender Entfernung vom Dosieraggregat reduziert ist. Wie anhand der angedeuteten Pfeile erkennbar, welche die Luftströmung 46 charakterisieren sollen, nimmt auf diese Weise die Geschwindigkeit der in der Ausgangsleitung 44 geführten Luftströmung 46 und damit auch die Geschwindigkeit der von der Luftströmung 46 getragenen Körner mit zunehmender Entfernung vom Dosieraggregat und mit abnehmendem Leitungsquerschnitt 60 der Ausgangsleitung 44 zu. Wenn oben die Geschwindigkeit der aus dem Dosieraggregat austretenden Luftströmung mit der Geschwindigkeit $v_2$ bezeichnet wurde, dann gilt gemäß Fig. 5 bei nach unten zunehmender Geschwindigkeit:

$$v_5 > v_4 > v_3 > v_2.$$

Die in Fig. 5 schematisch angedeutete Verjüngung der Ausgangsleitung 44 bzw. die Reduzierung des Leitungsquerschnitts 60, die vorzugsweise stetig oder zumindest abschnittsweise stetig ausgeführt ist, sorgt für eine erneute Beschleunigung des Luftstroms 46 nach dem Dosieraggregat und damit auch für eine Beschleunigung der darin getragenen Körner in Richtung zur Leitungsmündung bzw. zum Abgabeort im Boden. Da diese Beschleunigung weitgehend gleichmäßig oder stetig erfolgt, kann sie für eine Beruhigung abprallender und nicht kollisionsfrei in der Leitung 44 geführter Körner sorgen. Die Verjüngung kann in Kombination mit der gleichmäßigen Kornführung am Außenradius der gekrümmten Ausgangsleitung 44 für eine gezielte Verbesserung der gleichmäßigen Kornabstände und damit für eine weitere Präzisierung der Längsverteilung der Körner bei ihrer Ablage sorgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

**Bezugszeichenliste**

10   Sämaschine
12   Vorratsbehälter
14   Dosiereinrichtung
16   Luftstrom
18   Gebläse
20   Luftleitung
22   Steigrohr (Wellrohr)
24   Zentralverteiler, zentraler Verteiler
26   körnertragender Luftstrom, körnertragende Luftströmung

28    Saatleitung
30    Säschar
32    Boden, Ackerboden
34    Dosiervorrichtung
36    Zuluft, Zuluftströmung
38    Zuführleitung
40    Dosieraggregat
42    Scheibe, Förderscheibe, Fächerscheibe
44    Ausgangsleitung
46    austretende Luft (aus Dosiervorrichtung austretende Luft)
48    Gehäuse
50    Fallrohr, Saatleitungsrohr
52    tangentialer Verlauf
54    tangentialer Übergang
56    Außenkontur, Außenbereich, äußerer Bereich
58    Innenkontur, Innenbereich, innerer Bereich
60    Leitungsquerschnitt

**Patentansprüche**

1. Verfahren zur Dosierung von körnigem Gut wie Samenkörner, Dünger o. dgl., insbesondere innerhalb eines Verteil- oder Säaggregats einer Verteil- oder Sämaschine (10), bei dem das durch eine Luftströmung (26) getragene und beförderte körnige Gut durch eine Zuführleitung (38) in ein Dosieraggregat (40) geleitet, dort in einem ungefähr kreisbogenförmigen Verlauf geführt und tangential in eine sich an das Dosieraggregat (40) anschließende und zumindest abschnittsweise leicht gekrümmt verlaufende Ausgangsleitung (44, 50) geleitet wird, wobei das in einem äußeren Bereich (56) der gekrümmten Ausgangsleitung (44, 50) annähernd äquidistant und/oder gleichmäßig dosierte und beförderte körnige Gut von der das Dosieraggregat (40) zumindest teilweise durch die Ausgangsleitung (44, 50) verlassenden abgeleiteten Luftströmung (46) getragen wird, das körnige Gut innerhalb des Dosieraggregats (40) mit mechanischer Unterstützung und/oder unter zumindest teilweiser Separierung von der tragenden Luftströmung (26, 36) an einer Innenmantelfläche oder Innenwandung geführt wird, wobei den sich der Ausgangsleitung (44, 50) nähernden einzelnen Körnern in etwa gleiche Abstände voneinander aufgeprägt werden, **dadurch gekennzeichnet, dass** die durch die Ausgangsleitung (44, 50) geführte und das annähernd äquidistant beförderte körnige Gut tragende und fördernde Luftströmung (26, 36, 46) innerhalb des Dosieraggregats (40) beschleunigt wird.

2. Verfahren nach Anspruch 1, bei dem sich die Kreisbögen der Ausgangsleitung (44, 50) und der Innenmantelfläche des Dosieraggregats (40) tangential berühren und die Luft- und Kornführungsverläufe stufen- bzw. nahtlos ineinander übergehen.

3. Verfahren nach einem der Ansprüche 1 oder 2, bei dem sich ein Krümmungsradius der Ausgangsleitung (44, 50) mit steigendem Abstand vom Dosieraggregat (40) stetig oder unstetig öffnet.

4. Verfahren nach einem der Ansprüche 1 bis 3, bei dem ein Krümmungsradius der Ausgangsleitung (44, 50) zumindest in einem an das Dosieraggregat (40) grenzenden Abschnitt annähernd konstant ist.

5. Verfahren nach einem der Ansprüche 1 bis 4, bei dem das körnige Gut weitgehend kollisionsfrei und/oder verwirbelungsfrei in der Ausgangsleitung (44, 50) geführt wird und/oder in seiner Bewegungsbahn in etwa dem Verlauf der Ausgangsleitung (44, 50) folgt.

6. Verfahren nach einem der Ansprüche 1 bis 5, bei dem die Korngeschwindigkeit in Nähe des Außenradius der gekrümmten Ausgangsleitung (44, 50) tendenziell höher liegt als in Nähe des Innenradius.

7. Verfahren nach einem der Ansprüche 1 bis 6, bei dem die durch die Ausgangsleitung (44, 50) geführte und das annähernd äquidistant beförderte körnige Gut tragende und fördernde Luftströmung (26, 36, 46) innerhalb des Dosieraggregats (40) beschleunigt wird.

8. Verfahren nach Anspruch 7, bei dem die im Dosieraggregat (40) beschleunigte Luftströmung (46) mit einer Geschwindigkeit in die Ausgangsleitung (44, 50) eintritt und aus dieser hinaustritt, die größer ist als eine Zuführgeschwindigkeit, mit der die Luftströmung (26, 36) in die Zuführleitung (38) eintritt.

9. Dosiervorrichtung (34) für körniges Gut wie Samenkörner, Dünger o. dgl., die insbesondere Bestandteil eines Verteil- oder Säaggregats einer Verteil: oder Sämaschine (10) ist, mit einem Dosieraggregat (40), in das eine Zuführleitung (38) zur Aufnahme einer Luftströmung (26, 36) und zu deren Förderung in das Dosieraggregat (40) mündet, welche Luftströmung (26, 36) das körnige Gut zumindest teilweise trägt und befördert, wobei die Luftströmung (26, 36) innerhalb des Dosieraggregats (40) in einem ungefähr kreisbogenförmigen Verlauf führbar und tangential in eine sich an das Dosieraggregat (40) anschließende und zumindest abschnittsweise leicht gekrümmt verlaufende Ausgangsleitung (44, 50) geleitet ist, wobei sich die Kreisbögen der Ausgangsleitung (44, 50) und der Innenmantelfläche des Dosieraggregats (40) tangential berühren und die Luft- und Kornführungsverläufe stufen- bzw. nahtlos ineinander übergehen, und wobei ein Krümmungsradius der Ausgangsleitung (44, 50) zumindest in einem an das Dosieraggregat (40) grenzenden Abschnitt annähernd konstant ist, wobei das körnige Gut innerhalb des Dosieraggregats (40) mit mechanischer Unterstützung und/oder unter zumindest teilweiser Separierung von der tragenden Luftströmung (26, 36) an einer Innenmantelfläche oder Innenwandung geführt ist, wobei den sich der Ausgangsleitung (44, 50) nähernden einzelnen Körnern in etwa gleiche Abstände voneinander aufprägbar sind, **dadurch gekennzeichnet, dass** die durch die Ausgangsleitung (44, 50) geführte und das annähernd äquidistant beförderte körnige Gut tragende und fördernde Luftströmung (26, 36, 46) innerhalb des Dosieraggregats (40) beschleunigt ist.

10. Dosiervorrichtung nach Anspruch 9, bei der sich ein Krümmungsradius der Ausgangsleitung (44, 50) mit steigendem Abstand vom Dosieraggregat (40) stetig oder unstetig öffnet.

11. Dosiervorrichtung nach Anspruch 9 oder 10, bei der der Krümmungsradius der Ausgangsleitung (44, 50) in Richtung zum mündungsseitigen Auslass hin kleiner wird.

12. Dosiervorrichtung nach einem der Ansprüche 9 bis 11, bei der ein Leitungsquerschnitt der Ausgangsleitung (44, 50) mit zunehmender Entfernung vom Dosieraggregat (40) zumindest abschnittsweise stetig oder unstetig reduziert ist.

**Claims**

1. A method for metering granular material, such as seeds, fertiliser, or the like, in particular, within a distribution unit or sowing unit of a distribution machine or sowing machine (10), in which the granular material being carried and conveyed by an airflow (26) is directed through a feed tube (38) into a metering unit (40), there guided along an approximately circular arc path and tangentially directed into an outlet tube (44, 50) adjoining the metering unit (40) and running, at least in sections, slightly curved, wherein the granular material, which is approximately equidistantly and/or evenly metered and conveyed in an outer area (56) of the curved outlet tube (44, 50), is carried by the airflow (46) being discharged and at least partly exiting the metering unit (40) through the outlet tube (44, 50), the granular material is guided within the metering unit (40) with mechanical support and/or under at least partial separation from the carrying airflow (26, 36) along an inner cover surface or inner wall, wherein approximately equal distances from one another are imposed on the individual grains approaching the outlet tube (44, 50), **characterised in that** the airflow (26, 36, 46) being guided through the outlet tube (44, 50) and carrying and conveying the granular material, which is conveyed approximately equidistantly, is accelerated within the metering unit (40).

2. The method according to claim 1, in which the circular arcs of the outlet tube (44, 50) and of the inner cover surface of the metering unit (40) tangentially touch and the air guiding path and the grain-guiding path steplessly or, as the case may be, seamlessly merge into each other.

3. The method according to one of the claims 1 or 2, in which a radius of curvature of the outlet tube (44, 50) opens continuously or discontinuously with increasing distance from the metering unit (40).

4. The method according to one of the claims 1 to 3, in which a radius of curvature of the outlet tube (44, 50) is approximately constant, at least in a section abutting on the metering unit (40).

5. The method according to one of the claims 1 to 4, in which the granular material is guided largely collision-free and/or swirl-free in the outlet tube (44, 50) and/or in its trajectory approximately follows the course of the outlet tube (44, 50).

6. The method according to one of the claims 1 to 5, in which the grain velocity tends to be higher near the outer radius of the curved outlet tube (44, 50) than near the inner radius.

7. The method according to one of the claims 1 to 6, in which the airflow (26, 36, 46) being guided through the outlet tube (44, 50) and carrying and conveying the granular material, which is being conveyed approximately equidistantly, is accelerated within the metering unit (40).

8. The method according to claim 7, in which the airflow (46), which is accelerated in the metering unit (40), enters into and exits from the outlet tube (44, 50) at a velocity that is greater than a feed velocity at which the airflow (26, 36) enters into the feed tube (38).

9. A metering device (34) for granular material, such as seeds, fertiliser, or the like, which is, in particular, a component part of a distribution unit or sowing unit of a distribution machine or sowing machine (10), with a metering unit (40), into which a feed tube (38) leads to receive an airflow (26, 36) and to convey it into the metering unit (40), which airflow (26, 36) at least partly carries and conveys the granular material, wherein the airflow (26, 36) is guidable within the metering unit (40) along an approximately circular arc path and is tangentially directed into an outlet tube (44, 50) adjoining the metering unit (40) and running, at least in sections, slightly curved, wherein the circular arcs of the outlet tube (44, 50) and of the inner cover surface of the metering unit (40) tangentially touch and the air guiding path and the grain-guiding path steplessly or, as the case may be, seamlessly merge into each other, and wherein a radius of curvature of the outlet tube (44, 50) is approximately constant, at least in a section abutting on the metering unit (40), wherein the granular material is guided within the metering unit (40) with mechanical support and/or under at least partial separation from the carrying airflow (26, 36) along an inner cover surface or inner wall, wherein approximately equal distances from one another are imposable on the individual grains approaching the outlet tube (44, 50), **characterised in that** the airflow (26, 36, 46) being guided through the outlet tube (44, 50) and carrying and conveying the granular material, which is conveyed approximately equidistantly, is accelerated within the metering unit (40).

10. The metering device according to claim 9, in which a radius of curvature of the outlet tube (44, 50) opens continuously or discontinuously with increasing distance from the metering unit (40).

11. The metering device according to claim 9 or 10, in which the radius of curvature of the outlet tube (44, 50) becomes smaller toward the side of the outlet exit.

12. The metering device according to one of the claims 9 to 11, in which a tube cross section of the outlet tube (44, 50) is continuously or discontinuously reduced, at least in sections, with the distance from the metering unit (40) increasing.

## Revendications

1. Procédé de dosage de matières granulaires telles que graines, engrais ou similaires, en particulier à l'intérieur d'un groupe de distribution ou à semer d'un(e) machine de distribution ou semoir (10), dans lequel les matières granulaires portées et transportées par un courant d'air (26) sont guidées à travers une conduite d'amenée (38) dans un groupe de dosage (40) où elles sont guidées suivant une allure à peu près en arc de cercle et sont guidées tangentiellement dans une conduite de sortie (44, 50) qui est contiguë audit groupe de dosage (40) et s'étend, au moins par sections, de manière légèrement courbée, dans lequel les matières granulaires qui sont dosées et transportées de manière approximativement équidistante et/ou régulière dans une zone extérieure (56) de ladite conduite de sortie (44, 50) sont portées par le courant d'air (46) évacué qui quitte le groupe de dosage (40) au moins en partie par ladite conduite de sortie (44, 50), les matières granulaires sont guidées, à l'intérieur du groupe de dosage (40), suivant une surface latérale intérieure ou paroi intérieure en étant supportées mécaniquement et/ou en étant séparées au moins en partie du courant d'air (26, 36) porteur, dans lequel des distances à peu près égales les unes des autres sont imposées aux graines individuelles s'approchant de la conduite de sortie (44, 50), **caractérisé par le fait que** le courant d'air (26, 36, 46) qui est guidé à travers la conduite de sortie (44, 50) et qui porte et transporte les matières granulaires transportées de manière approximativement équidistante est accéléré à l'intérieur du groupe de dosage (40).

2. Procédé selon la revendication 1, dans lequel les arcs de cercle de la conduite de sortie (44, 50) et de la surface latérale intérieure du groupe de dosage (40) se touchent tangentiellement et les allures de guidage d'air et de graines se confondent de manière continue ou bien sans interruptions.

3. Procédé selon l'une quelconque des revendications 1 ou 2, dans lequel un rayon de courbure de la conduite de sortie (44, 50) s'ouvre de manière continue ou discontinue avec une distance croissante du groupe de dosage (40).

4. Procédé selon l'une quelconque des revendications 1 à 3, dans lequel un rayon de courbure de la conduite de sortie (44, 50) est approximativement constant au moins dans une section adjacente au groupe de dosage (40).

5. Procédé selon l'une quelconque des revendications 1 à 4, dans lequel les matières granulaires sont guidées dans la conduite de sortie (44, 50) de manière à être dans une large mesure exemptes de collisions et/ou de turbulences, et/ou suivent, quant à leur trajectoire de mouvement, à peu près l'allure de la conduite de sortie (44, 50).

6. Procédé selon l'une quelconque des revendications 1 à 5, dans lequel la vitesse des graines à proximité du rayon extérieur de la conduite de sortie (44, 50) courbée est tendanciellement plus élevée qu'à proximité du rayon intérieur.

7. Procédé selon l'une quelconque des revendications 1 à 6, dans lequel le courant d'air (26, 36, 46) guidé à travers la conduite de sortie (44, 50) et portant et transportant les matières granulaires transportées de manière approximativement équidistante est accéléré à l'intérieur du groupe de dosage (40).

8. Procédé selon la revendication 7, dans lequel le courant d'air (46) accéléré à l'intérieur du groupe de dosage (40) entre dans la conduite de sortie (44) et sort de celle-ci à une vitesse qui est supérieure à une vitesse d'alimentation à laquelle le courant d'air (26, 36) entre dans la conduite d'amenée (38).

9. Dispositif de dosage (34) pour matières granulaires telles que graines, engrais ou similaires, qui, en particulier, est une partie constituante d'un groupe de distribution ou à semer d'un(e) machine de distribution ou semoir (10), comprenant un groupe de dosage (40) dans lequel débouche une conduite d'amenée (38) destinée à recevoir un courant d'air (26, 36) et à transporter celui-ci dans le groupe de dosage (40), lequel courant d'air (26, 36) portant et transportant au moins en partie les matières granulaires, dans lequel le courant d'air (26, 36), à l'intérieur du groupe de dosage (40), peut être guidé suivant une allure à peu près en arc de cercle et est guidé tangentiellement dans une conduite de sortie (44, 50) qui est contiguë audit groupe de dosage (40) et s'étend, au moins par sections, de manière légèrement courbée, dans lequel les arcs de cercle de la conduite de sortie (44, 50) et de la surface latérale intérieure du groupe de dosage (40) se touchent tangentiellement et les allures de guidage d'air et de graines se confondent de manière continue ou bien sans interruptions, et dans lequel un rayon de courbure de la conduite de sortie (44, 50) est approximativement constant au moins dans une section adjacente au groupe de dosage (40), dans lequel les matières granulaires sont guidées, à l'intérieur du groupe de dosage (40), suivant une surface latérale intérieure ou paroi intérieure en étant supportées mécaniquement et/ou en étant séparées au moins en partie du courant d'air (26, 36) porteur, dans lequel des distances à peu près égales les unes des autres peuvent être imposées aux graines individuelles s'approchant de la conduite de sortie (44, 50), **caractérisé par le fait que** le courant d'air (26, 36, 46) qui est guidé à travers la conduite de sortie (44, 50) et qui porte et transporte les matières granulaires transportées de manière approximativement équidistante est accéléré à l'intérieur du groupe de dosage (40).

10. Dispositif de dosage selon la revendication 9, dans lequel un rayon de courbure de la conduite de sortie (44, 50) s'ouvre de manière continue ou discontinue avec une distance croissante du groupe de dosage (40).

11. Dispositif de dosage selon la revendication 9 ou 10, dans lequel le rayon de courbure de la conduite de sortie (44, 50) diminue en direction de la sortie côté bouche.

12. Dispositif de dosage selon l'une quelconque des revendications 9 à 11, dans lequel une section transversale de conduite de la conduite de sortie (44, 50) est réduite de façon continue ou discontinue, au moins par sections, avec une distance croissante du groupe de dosage (40).

Fig. 1

Fig. 2

# Fig. 3

34

40, 48

42

54

52

46

44, 50

46

46

Fig. 4

44, 50

46

58

$v_i$

$v_a$

56

Fig. 5

60    44, 50

$v_2$

$v_3$

58

$v_4$

56

$v_5$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1044487 B
- WO 2004004441 A1
- WO 2012167372 A1
- DE 102012105048 A1